# EUROPÄISCHE PATENTSCHRIFT

(11) **EP 1 227 253 B1**
(45) Veröffentlichungstag und Bekanntmachung des Hinweises auf die Patenterteilung: **25.03.2009**
(21) Anmeldenummer: 01130808.7
(22) Anmeldetag: 24.12.2001
(51) Int. Cl.: F16B 21/09, F16B 21/16

(54) **Vorrichtung für die Verbindung zweier Werkstücke**
Device assembling two work pieces
Dispositif d'assemblage de deux pièces d'oeuvre

(30) Priorität: 25.01.2001 DE 10103840
(43) Veröffentlichungstag der Anmeldung: 31.07.2002
(73) Patentinhaber: Junker & Partner GmbH, 66636 Tholey (DE)
(72) Erfinder: Junker, Franz-Rudolf, 66636 Tholey-Sotzweiler (DE)
(74) Vertreter: Bernhardt, Reinold

(56) Entgegenhaltungen:
- EP-A- 1 050 365
- US-A- 5 302 065

## Beschreibung

Die Erfindung betrifft eine Vorrichtung für die Verbindung zweier Bauteile, mit einem von einem Bauteil vorstehenden Passelement für den Eingriff in eine an dem anderen Bauteil gebildete, zueinander in einem Rasterabstand I angeordnete Passausnehmung zur wahlweisen Aufnahme des Passelements sowie mit einer Einrichtung zur Befestigung der Bauteile aneinander in einer durch den Eingriff des Passelements in die Passausnehmung bestimmten gegenseitigen Positionierung.

Bei dem genannten einen Bauteil handelt es sich insbesondere um eine Trägerplatte oder um ein Trägerprofil innerhalb einer Halterungsvorrichtung für Werkstücke, wie sie z.B. in der Automobilindustrie zum Einspannen zu vermessender Karosserieteile verwendet wird und aus der DE 299 11 395.7 U1 bekannt ist. Vorzugsweise betrifft das andere Bauteil eine Verbindungsplatte, die es ermöglicht, an der Trägerplatte oder dem Trägerprofil in einer vorgegebenen Position ein weiteres Bauteil, z.B. ein weiteres Trägerprofil, zu befestigen.

Bei den genannten Halterungsvorrichtungen kommt es darauf an, dass Anlagepositionen der Halterungsvorrichtung gegen das Werkstück möglichst genau den Nennmaßen des Werkstücks angepasst sind. Entsprechend genau müssen die Elemente der Halterungsvorrichtung, die eine Vielzahl solcher Anlagepositionen aufweisen kann, gefertigt und zur Errichtung der Vorrichtung miteinander verbindbar sein. Ferner strebt man an, solche Halterungsvorrichtungen in bezug auf die Verbindungsmöglichkeiten der Elemente möglichst variabel zu gestalten, um eine Anpassung an unterschiedliche Werkstücke und Messaufgaben vornehmen zu können.

In der US 5,302,065 ist eine Vorrichtung zur gegenseitigen Verriegelung von Bauteilen beschrieben. An einem Bauteil sind Arretierbolzen angeordnet, die in eine Hinterschneidungen aufweisende Sitzschiene an dem anderen Bauteil eingreifen. In der Sitzschiene sind neben den Arretierbolzen in gleichem Abstand voneinander kreisförmige Aussparungen zur Aufnahme von Passelementen gebildet. Die Arretierbolzen werden durch Drehung in Verschlussposition gebracht, hintergreifen dann die Schienen im Bereich zwischen den Aussparungen und werden mit einer Mutter relativ zum Bauteil verspannt.

Der vorliegenden Erfindung liegt die Aufgabe zugrunde, eine z.B. in Vorrichtungen für die Halterung von Werkstücken in einer Messposition verwendbare Verbindungsvorrichtung der eingangs erwähnten Art variabler als bekannte solche Vorrichtungen auszubilden.

Die diese Aufgabe lösende Vorrichtung nach der Erfindung ist dadurch gekennzeichnet, dass Gruppen von zueinander im Rasterabstand I angeordneten Rasterausnehmungen bezogen auf eine Symmetrieachse derart angeordnet sind, dass durch 180°-Drehungen des anderen Bauteils um eine zu der Symmetrieachse senkrechte Achse Verbindungspositionierungen im Abstand I/2 auswählbar sind.

Gemäß dieser Erfindungslösung können verschiedene gegenseitige Positionierungen der Bauteile mit hoher, durch die Passungen gesicherter Genauigkeit ausgewählt werden. Gruppen von zueinander in einem Rasterabstand I angeordneten Rasterausnehmungen bezogen auf eine Symmetrieachse sind derart angeordnet, dass im Rahmen der Symmetrie durch 180°-Drehungen des anderen Bauteils um eine zu der Symmetrieachse senkrechte Achse Positionierungsabstände der Länge I/2 auswählbar sind. Vorteilhaft kann auf diese Weise, ohne den Rasterabstand zwischen den Passausnehmungen und damit die Abmessungen der Ausnehmungen selbst verringern zu müssen, eine Verfeinerung des Positionierungsrasters erreicht werden.

In der bevorzugten Ausführungsform der Erfindung weist die Einrichtung zur Befestigung der Bauteile aneinander Klemmbefestigungselemente auf. Insbesondere kann die Befestigungseinrichtung eine in einem der Bauteile gebildete hinterschnittene Nut und einen unter Verbindung mit dem anderen Bauteil in der Nut verklemmbaren Nutenstein umfassen.

Ferner ist in der bevorzugten Ausführungsform eine Führung vorgesehen, entlang welcher die Bauteile in Richtung der genannten Geraden gegeneinander verschiebbar sind. Zweckmäßig weist eine solche Führung an den Öffnungsrändern der Nut gebildete Abstufungen für die Aufnahme einer von dem anderen Bauteil vorstehenden Führungsschiene auf.

Vorzugsweise sind die Passausnehmungen als kreisrunde Passbohrungen ausgebildet, wobei sich insbesondere solche Passausnehmungen unter Öffnung zueinander am Umfang überschneiden können.

Entsprechend handelt es sich bei den Passelementen um runde Zapfen, die einander gegenüberliegende Abflachungen aufweisen können, zu denen die genannte Gerade parallel verläuft.

Für das vorstehende Passelement kann an dem einen Bauelement ein Sitz gebildet sein, wobei vorzugsweise die Möglichkeit zur Befestigung des Passelements an dem Sitz besteht.

An dem einen Bauteil, z.B. einem Trägerprofil, können mehrere Passelemente oder Sitze für Passelemente entlang einer Geraden, die sich im Falle des Trägerprofils in dessen Längsrichtung erstreckt, in einem Rasterabstand m zueinander angeordnet sein, wobei m ein ganzzähliges Vielfaches der Rasterlänge I ist. Im Zusammenspiel mit dem anderen Bauteil, z.B. einer Befestigungsplatte, kann dann entlang der gesamten Länge des Trägerprofils im Rasterabstand von I bzw. 1/2 eine Anbringung des anderen Bauteils, z.B. einer Verbindungsplatte, erfolgen.

Die Erfindung soll nun anhand eines Ausführungsbeispiels und der beiliegenden, sich auf dieses Ausführungsbeispiel beziehenden Zeichnungen näher erläutert werden. Es zeigen:
- Fig. 1: eine in einer Verbindungsvorrichtung nach der Erfindung verwendbare Verbindungs-platte,
- Fig. 2: über die Verbindungsplatte von Fig. 1 miteinander verbundene Trägerprofile,
- Fig. 3: eine Explosionsdarstellung der gemäß Fig. 2 miteinander verbundenen Teile in perspektivischer Ansicht,
- Fig. 4: eine Detaildarstellung der gemäß Fig. 2 miteinander verbundenen Trägerprofile, und
- Fig. 5: ein Detail der Verbindung zwischen den Trägerprofilen.

In den Figuren ist mit dem Bezugszeichen 1 eine Verbindungsplatte bezeichnet, über welche in dem betreffenden Ausführungsbeispiel übereinstimmend ausgebildete Trägerprofile 2 und 3 miteinander verbunden sind. Im Umriß ist die Querschnittsfläche der Trägerprofile 2 und 3 quadratisch.

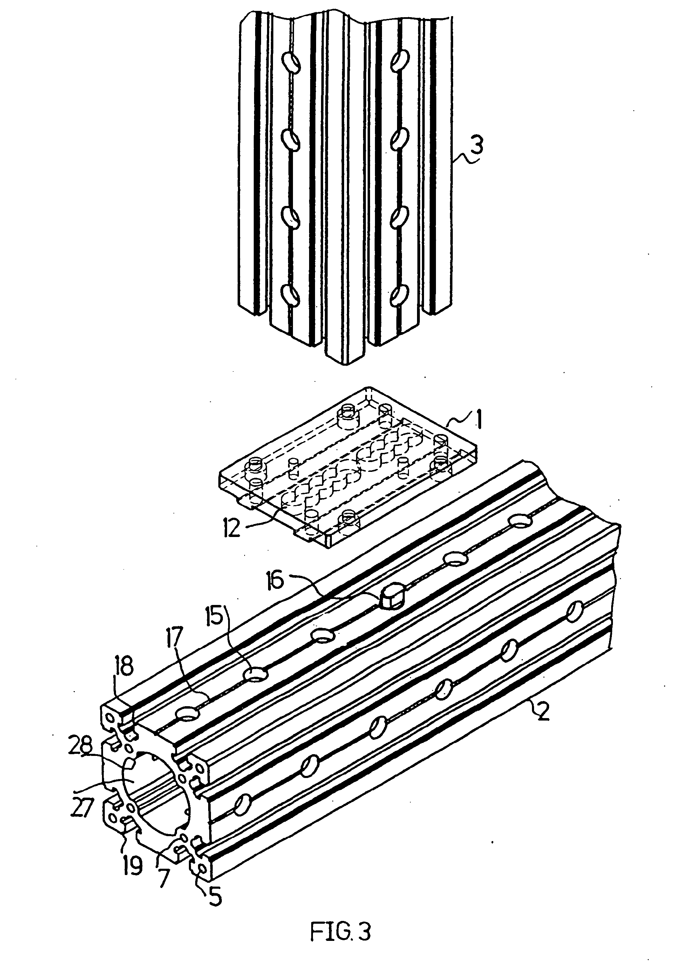

Die Verbindungsplatte 1 weist vier angesenkte Bohrungen 4 für eine Schraubverbindung mit der Stirnseite des Trägerprofils 3 auf, wobei die Verbindungsschrauben (nicht gezeigt) jeweils in eine von vier an den Ecken des Trägerprofils gebildeten Gewindebohrungen 5 (Fig. 3) eingreifen.

Die Verbindungsplatte 1 weist ferner zwei Passbohrungen 6 auf, in welche nicht gezeigte Passstifte für den Eingriff in Bohrungen 7 (Fig. 3) am Trägerprofil 3 einsetzbar sind. Die zwei Passbohrungen 6 sind auf einer Diagonalen eines Quadrats angeordnet, dessen Eckpunkte die Achsen der vier angesenkten Bohrungen 4 bilden.

Die Verbindungsplatte weist vier weitere, entsprechend den Eckpunkten eines Rechtsecks angeordnete Durchgangsbohrungen 8 auf.

In symmetrischer Anordnung zur Mittellängsachse der rechteckigen Verbindungsplatte stehen von der Verbindungsplatte zwei Führungsschienen 9 vor.

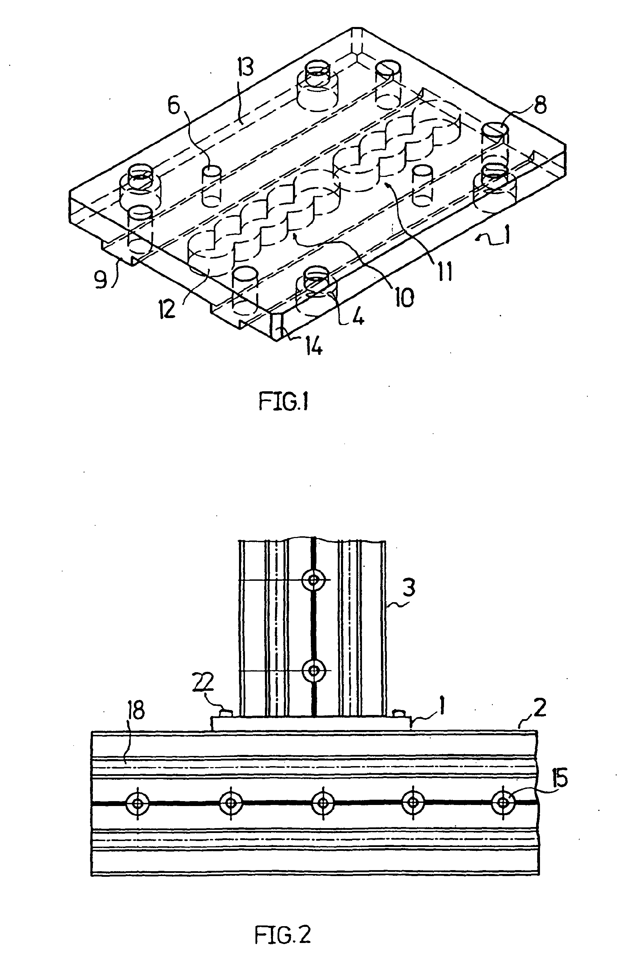

Auf der Mittellängsachse der Verbindungsplatte 1 erstrecken sich zwei Gruppen 10 und 11 aneinandergereihter Passbohrungen 12, die als Sackbohrungen ausgebildet sind, welche zu der die Führungsschienen 9 aufweisenden Seite der Verbindungsplatte 1 hin öffnen. Die innerhalb der Gruppen 10 und 11 jeweils in einem Rasterabstand 1 angeordneten Passbohrungen überschneiden sich, so dass sie am Umfang zueinander geöffnet sind. Wie insbesondere Fig. 1 zu entnehmen ist, weist die Gruppe 10 fünf Passbohrungen und die Gruppe 11 vier Passbohrungen auf. Die Bohrungsachse der innersten Passbohrung der Gruppe 10 liegt in der Plattenmitte. Die Bohrungsachse der innersten Passbohrung der Gruppe 11 ist von der Achse der innersten Passbohrung der Gruppe 10 um das 1½-fache der Rasterlänge I entfernt.

An der Plattenseite mit den Führungsschienen 9 ist am Plattenrand eine umlaufende, lediglich durch die Führungsschienen 9 unterbrochene Randanfasung 13 gebildet. Weitere Randanfasungen 14 sind an den vier Ecken der Verbindungsplatte 1 vorgesehen.

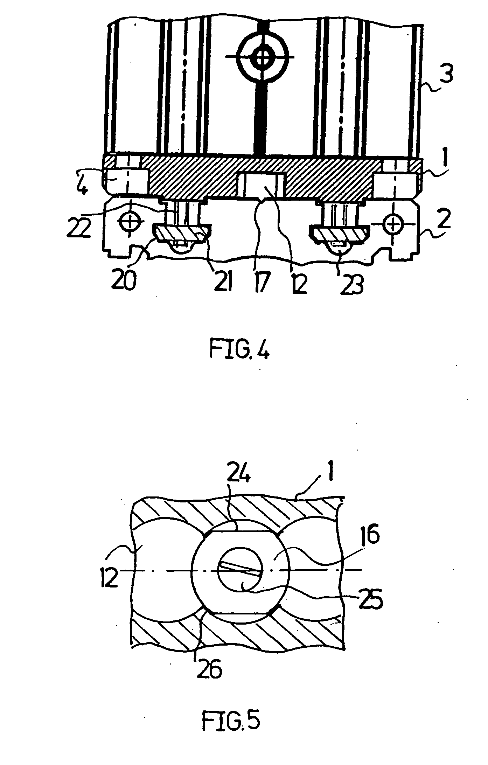

Es wird nun insbesondere auf Fig. 3 und 4 Bezug genommen, wo mit dem Bezugszeichen 15 Bohrungen bezeichnet sind, welche Sitze für ein in dem beschriebenen Ausführungsbeispiel als Zapfen ausgebildetes Passelement 16 bilden. Solche Sitzbohrungen 15 sind auf der Mittellängsachse aller vier Seiten des Trägerprofils in einem Rasterabstand m gebildet, wobei der Rasterabstand m in dem betreffenden Ausführungsbeispiel 10mal so groß wie der Rasterabstand I zwischen den Passbohrungen 12 in der Verbindungsplatte 1 ist.

Jeweils symmetrisch zur Mittellängsachse ist an allen vier Seiten eine Rille 17 mit dreieckigem Querschnitt in das Trägerprofil eingebracht, deren Fußlinie die Bohrungsachsen der Sitzbohrungen 15 schneidet. Ferner sind symmetrisch zur Mittellängsachse auf allen vier Seiten des Trägerprofils 2 bzw. 3 zwei hinterschnittene Nuten 18 gebildet, deren parallele Öffnungsränder jeweils eine Abstufung 19 für die Bildung einer die Schienen 9 der Verbindungsplatte 1 aufnehmenden Führung aufweisen.

Wie insbesondere aus Fig. 4 hervorgeht, ist in eine Aufweitung 20 der hinterschnittenen Nut 18 ein Nutenstein 21 einsetzbar, der eine Gewindebohrung aufweist, in welche das Gewinde einer Schraube 22 eingreifen kann, die durch eine der Bohrungen 8 in der Verbindungsplatte 1 geführt ist.

In den Boden der Nut 18 ist eine Rille 23 eingebracht, deren Breite nicht viel größer als der Gewindedurchmesser der Schraube 22 ist. Durch diese Bodenrille 23 ist Freiraum für das Ende der Schraube 22 geschaffen, das infolge toleranzbedingter Schwankungen der Schraubenlänge im Klemmzustand unterschiedlich weit von dem Nutenstein 21 vorstehen kann.

Der Nutenstein 21 erstreckt sich über die gesamte Länge der Verbindungsplatte 1 und weist dementsprechend zwei Gewindebohrungen für den Eingriff von zwei Schrauben 22 auf. Anstelle eines durchgehenden Nutensteins könnten auch zwei, jeweils nur eine Durchgangsbohrung aufweisende Nutensteine vorgesehen sein.

Es wird nun auf Fig. 5 Bezug genommen, wo ein Ausschnitt der Verbindungsplatte 1 in Schnittdarstellung gezeigt ist. In eine der Passbohrungen 12 greift das in Fig. 3 sichtbare Passelement 16 ein, das, wie die Draufsicht von Fig. 5 zeigt, als im Querschnitt runder Zapfen mit einander gegenüberliegenden Abflachungen 24 ausgebildet ist. Mittels einer Schraube 25, die in ein nicht gezeigtes, zur Sitzbohrung 15 koaxiales Gewinde im Trägerprofil 2 eingreift, lässt sich das Passelement 16 in dem Sitz fest verankern.

Wie aus Fig. 5 ferner hervorgeht, liegt das Passelement 16 jeweils an vier Stellen 26 nur über einen verhältnismäßig geringen Teil seines durch Kreislinien begrenzten Umfangs gegen die Wand der Passbohrung 12 an. In dem betreffenden Ausführungsbeispiel sind diese Anlagestellen etwa entsprechend den Eckpunkten eines Quadrats angeordnet, so dass trotz der begrenzten Kontaktbereiche eine genaue Zentrierung und ein genauer Passsitz gesichert ist.

Wie aus Fig. 3 hervorgeht, weist das Trägerprofil 2 bzw. 3 eine im Querschnitt im wesentlichen kreisförmige Längsausnehmung 27 auf, in die hin zur jeweiligen Materialverstärkung im Eckbereich des Profils vier Stege 28 vorstehen.

Zur Herstellung der in den Fig. 3 bis 5 gezeigten Verbindung zwischen den Trägerprofilen 2 und 3 über die Verbindungsplatte 1 wird die Verbindungsplatte 1 zunächst stirnseitig an dem Trägerprofil 3 durch die obengenannten Schrauben befestigt, welche durch die angesenkten Bohrungen 4 geführt werden und in die Gewindebohrungen 5 im Trägerprofil 2 eingreifen. Der Schraubenkopf verschwindet jeweils in der Einsenkung der Bohrung 4.

Eine genaue Positionierung der Verbindungsplatte 1 an der Stirnseite des Trägerprofils 3 läßt sich durch zwei Passstifte erreichen, welche in den Passbohrungen 6 der Verbindungsplatte 1 sitzen und in die Bohrungen 7 im Trägerprofil 3 eingreifen. Bei Verwendung von zwei solchen Passstiften bedürfen die Bohrungen 7 keiner besonderen Bearbeitung als Passsitz.

An einer gewünschten Verbindungsstelle wird in der betreffenden Sitzbohrung 15 das Passelement 16 mit Hilfe der Schraube 25 befestigt und die mit dem Trägerprofil 3 verbundene Verbindungsplatte 1 unter Eingriff in eine ausgewählte Passbohrung 12 auf das Trägerprofil 2 aufgesetzt, wobei die Führungsschienen 9 in die durch die Abstufungen 19 an den Nutenrändern gebildeten Führungsbahnen eingreifen. Die an den Stirnenden des Trägerprofils 2 in die Nuten 18 eingeführten Nutensteine 21 werden nun über die Schrauben 22 mit der Verbindungsplatte 1 verbunden. Die Schrauben 22 üben eine Zugkraft aus, durch welche unter Herstellung einer Klemmverbindung der Nutenstein gegen die Hinterschneidung und die Verbindungsplatte 1 gegen das Trägerprofil 2 gedrückt werden.

Je nach Auswahl einer der Passbohrungen 12 der Gruppe 10 können in jeder Position des Passelements 16 fünf verschiedene Verbindungspositionen ausgewählt werden, die um die Rasterlänge I voneinander entfernt sind. Bei Drehung der Anordnung aus Verbindungsplatte 1 und Trägerprofil 3 um die Längsachse des Trägerprofils 3 kann eine der Passbohrungen der Gruppe 11 ausgewählt werden und der Symmetrie des Trägerprofils kann dadurch eine Verringerung des Rasterabstands auf 1/2 erreicht werden.

In dem gezeigten Ausführungsbeispiel haben die Schienen 9 in den Führungen ein gewisses Spiel. Für den genauen Sitz der Verbindungsplatte sorgt der in die Passbohrung eingreifende Passstift. Es wäre insbesondere bei veränderter Anordnung der Anlagestellen 26 denkbar, die Abstufungen 19 zum Teil passgenau auszubilden, so dass für einen genauen Sitz des Trägerprofils 3 an dem Trägerprofil 2 in Richtung quer zum Trägerprofil 2 die Randabstufungen 19 sorgen, während für die genaue Positionierung das in eine der Passbohrungen 12 eingreifende Passelement 16 nur in Längsrichtung des Trägerprofils 2 maßgebend ist.

## Patentansprüche

1. Vorrichtung mit zweie Bauteilen (1,2) zur Verbindung derselben, mit einem von einem der beiden Bauteile (2) vorstehenden Passelement (16) für den Eingriff in eine der an dem anderen Bauteil (1) gebildeten, zueinander in einem Rasterabstand I angeordneten Passausnehmungen (12) zur wahlweisen Aufnahme des Passelements (16) sowie mit einer Einrichtung zur Befestigung der Bauteile (1,2) aneinander in einer durch den Eingriff des Passelements (16) in die gewählte Passausnehmung (12) bestimmten gegenseitigen Positionierung,
**dadurch gekennzeichnet,**
**dass** Gruppen (10,11) von zueinander im Rasterabstand I angeordneten Rasterausnehmungen bezogen auf eine Symmetrieachse derart angeordnet sind, dass durch 180°-Drehungen des anderen Bauteils (1) um eine zu der Symmetrieachse senkrechte Achse Verbindungspositionierungen im Abstand I/2 auswählbar sind.

2. Vorrichtung nach Anspruch 1,
**dadurch gekennzeichnet,**
**dass** die Passausnehmungen (12) entlang einer Geraden angeordnet sind.

3. Vorrichtung nach Anspruch 2,
**dadurch gekennzeichnet,**
**dass** eine Führung (19) zur gegenseitigen Verschiebung der Bauteile (1,2) in Richtung der Geraden vorgesehen ist.

4. Vorrichtung nach einem der Ansprüche 1 bis 3,
**dadurch gekennzeichnet,**
**dass** die Einrichtung zur Befestigung der Bauteile aneinander Klemmbefestigungselemente (21) aufweisen.

5. Vorrichtung nach einem der Ansprüche 1 bis 4,
**dadurch gekennzeichnet,**
**dass** die Befestigungseinrichtung eine in einem der Bauteile (2) gebildete hiriterschnittene Nut (18) und einen unter Verbindung mit dem anderen Bauteil (1) in der Nut verklemmbaren Nutenstein (21) umfasst.

6. Vorrichtung nach Anspruch 5,
**dadurch gekennzeichnet,**
**dass** die Führung (19) an den Öffnungsrändern der Nut (18) gebildete Abstufungen (19) für die Aufnahme einer von dem anderen Bauteil (1) vorstehenden Führungsschiene (9) aufweist.

7. Vorrichtung nach einem der Ansprüche 1 bis 6,
**dadurch gekennzeichnet,**
**dass** die Passausnehmungen als runde Passbohrungen (12) ausgebildet sind.

8. Vorrichtung nach einem der Ansprüche 1 bis 7,
**dadurch gekennzeichnet,**
**dass** die Passausnehmungen (12) sich unter Öffnung zueinander am Umfang überschneiden.

9. Vorrichtung nach einem der Ansprüche 1 bis 8,
**dadurch gekennzeichnet,**
**dass** das Passelement (16) als runder Zapfen miteinander gegenüberliegenden Abflachungen (24) ausgebildet ist.

10. Vorrichtung nach Anspruch 9,
**dadurch gekennzeichnet,**
**dass** sich die Gerade parallel zu den Abflachungen (24) erstreckt.

11. Vorrichtung nach einem der Ansprüche 1 bis 10,
**dadurch gekennzeichnet,**
**dass** an dem einen Bauteil (2) ein Sitz (15) für das Passelement (16) gebildet ist.

12. Vorrichtung nach Anspruch 11,
**dadurch gekennzeichnet,**
**dass** das Passelement zur Verankerung in dem Sitz (15) durch eine Schraube (25) vorgesehen ist.

13. Vorrichtung nach einem der Ansprüche 1 bis 12,
**dadurch gekennzeichnet,**
**dass** an dem einen Bauteil (2) mehrere Passelemente oder Sitze (15) für Passelemente (16) entlang einer Geraden in einem Rasterabstand m zueinander angeordnet sind.

14. Vorrichtung nach einem der Ansprüche 1 bis 13,
**dadurch gekennzeichnet,**
**dass** das eine Bauteil ein Trägerprofil (2) und das andere Bauteil eine Verbindungsplatte (1) zur längsseitigen Verbindung des Trägerprofils (2) mit einem weiteren Bauteil (3) ist.

## Claims

1. Arrangement which comprises two components (1, 2) and is intended for connecting the same, having a fitting element (16) which projects from one of the two components (2) and is intended for engaging in one of the fitting apertures (12) which are spaced apart by unit spacings 1 on the other component (1) and are intended for optionally accommodating the fitting element (16), and having a device for fastening the components (1, 2) on one another in a position in relation to one another which is determined by the fitting element (16) engaging in the selected fitting aperture (12), **characterized in that** groups (10, 11) of apertures, spaced apart from one another by unit spacings 1, are arranged in relation to an axis of symmetry such that, by virtue of the other component (1) being rotated through 180° about an axis which is perpendicular to the axis of symmetry, it is possible to select 1/2-spacing connecting positions.

2. Arrangement according to Claim 1, **characterized in that** the fitting apertures (12) are arranged along a straight line.

3. Arrangement according to Claim 2, **characterized by** the provision of a guide (19) for displacing the components (1, 2) in relation to one another in the direction of the straight line.

4. Arrangement according to one of Claims 1 to 3, **characterized in that** the device for fastening the components on one another has clamping-action fastening elements (21).

5. Arrangement according to one of Claims 1 to 4, **characterized in that** the fastening device comprises an undercut groove (18), which is formed in one of the components (2), and a sliding block (21), which can be clamped in the groove and is connected in the process to the other component (1).

6. Arrangement according to Claim 5, **characterized in that** the guide (19) has stepped portions (19) formed on the opening peripheries of the groove (18) for the purpose of accommodating a guide rail (9) which projects from the other component (1).

7. Arrangement according to one of Claims 1 to 6, **characterized in that** the fitting apertures are designed in the form of round fitting holes (12).

8. Arrangement according to one of Claims 1 to 7, **characterized in that** the fitting apertures (12) overlap so that they are open in relation to one another at the circumference.

9. Arrangement according to one of Claims 1 to 8, **characterized in that** the fitting element (16) is designed in the form of a round pin with mutually opposite flattened portions (24).

10. Arrangement according to Claim 9, **characterized in that** the straight line extends parallel to the flattened portions (24).

11. Arrangement according to one of Claims 1 to 10, **characterized in that** a seat (15) for the fitting element (16) is formed on the one component (2).

12. Arrangement according to Claim 11, **characterized in that** the fitting element is provided in order to be anchored in the seat (15) by a screw (25).

13. Arrangement according to one of Claims 1 to 12, **characterized in that,** on the one component (2), a plurality of fitting elements or seats (15) for fitting elements (16) are arranged along a straight line at unit spacings m from one another.

14. Arrangement according to one of Claims 1 to 13, **characterized in that** the one component is a carrier profile (2) and the other component is a connecting plate (1) for connecting the carrier profile (2) along its longitudinal side to a further component (3).

## Revendications

1. Dispositif avec deux composants (1, 2) pour la liaison de ceux-ci, comprenant un élément d'ajustement (16) qui dépasse depuis l'un des deux composants (2) pour l'engagement dans l'un des évidements d'ajustement (12) formés sur l'autre composant (1) et agencés les uns par rapport aux autres dans un écartement tramé I, pour recevoir sélectivement l'élément d'ajustement (16), et comprenant un système pour la fixation des composants (1, 2) l'un contre l'autre dans un positionnement réciproque déterminé par l'engagement de l'élément d'ajustement (16) dans l'évidement d'ajustement (12) choisi,
**caractérisé en ce que**
des groupes (10, 11) d'évidements tramés agencés les uns par rapport aux autres à l'écartement tramé I sont agencés, par référence à un axe de symétrie, de telle façon que par des rotations de 180° de l'autre composant autour d'un axe perpendiculaire à l'axe de symétrie, il est possible de sélectionner des positionnements de liaison à des écartements de I/2.

2. Dispositif selon la revendication 1, **caractérisé en ce que** les évidements d'ajustement (12) sont agencés le long d'une droite.

3. Dispositif selon la revendication 2, **caractérisé en ce qu'**il est prévu un guidage (19) pour le déplacement réciproque des composants (1, 2) en direction de la droite.

4. Dispositif selon l'une des revendications 1 à 3, **caractérisé en ce que** le système pour la fixation des composants comprend des éléments de fixation à coincement (21).

5. Dispositif selon l'une des revendications 1 à 4, **caractérisé en ce que** le système de fixation comprend une gorge en contre-dépouille (18) ménagée dans l'un des composants (2) et un patin (21) susceptible d'être coincé dans la gorge en établissant une liaison avec l'autre composant (1).

6. Dispositif selon la revendication 5, **caractérisé en ce que** le guidage (19) comprend des gradins (19) formés au niveau des bordures des ouvertures de la gorge (18) pour la réception d'un rail de guidage (9) qui dépasse de l'autre composant (1).

7. Dispositif selon l'une des revendications 1 à 6, **caractérisé en ce que** les évidements d'ajustement sont réalisés sous forme de perçages d'ajustement ronds (12).

8. Dispositif selon l'une des revendications 1 à 7, **caractérisé en ce que** les évidements d'ajustement (12) se recoupent à la périphérie en étant ouverts les uns vers les autres.

9. Dispositif selon l'une des revendications 1 à 8, **caractérisé en ce que** l'élément d'ajustement (16) est formé comme un tenon rond doté de méplats (24) mutuellement opposés.

10. Dispositif selon la revendication 9, **caractérisé en ce que** la droite s'étend parallèlement aux méplats (24).

11. Dispositif selon l'une des revendications 1 à 10, **caractérisé en ce qu'**un siège (15) pour l'élément d'ajustement (16) est formé sur l'un des composants (2).

12. Dispositif selon la revendication 11, **caractérisé en ce que** l'élément d'ajustement est prévu pour être ancré dans le siège (15) par une vis (25).

13. Dispositif selon l'une des revendications 1 à 12, **caractérisé en ce que** plusieurs éléments d'ajustement ou plusieurs sièges (15) pour des éléments d'ajustement (16) sont agencés sur l'un des composants (2) le long d'une droite à un écartement tramé m les uns des autres.

14. Dispositif selon l'une des revendications 1 à 13, **caractérisé en ce qu'**un composant est un profilé porteur (2) et l'autre composant est une plaque de liaison (1) pour la liaison en sens longitudinal du profilé porteur (2) avec un autre composant (3).
